# EUROPÄISCHE PATENTSCHRIFT

(11) **EP 2 125 284 B1**
(45) Veröffentlichungstag und Bekanntmachung des Hinweises auf die Patenterteilung: **27.06.2012**
(21) Anmeldenummer: 07819878.5
(22) Anmeldetag: 21.11.2007
(51) Int. Cl.: B23Q 1/60, B23C 3/18

(54) **VERFAHREN ZUR BEARBEITUNG VON ROHLINGEN IN EINER SPANNVORRICHTUNG**
METHOD FOR MACHINING BLANKS IN A CLAMP
PROCÉDÉ D'USINAGE D'ÉBAUCHES DANS UN OUTIL DE SERRAGE

(30) Priorität: 13.12.2006 DE 102006059227
(43) Veröffentlichungstag der Anmeldung: 02.12.2009
(73) Patentinhaber: HAMUEL Maschinenbau GmbH & Co. KG, 96484 Meeder (DE)
(72) Erfinder: HÖHN, Wolf-Dieter, 96484 Meeder (DE); SCHERER, Frank, 60529 Frankfurt (DE)
(74) Vertreter: Katscher Habermann Patentanwälte
(86) Internationale Anmeldenummer: PCT/EP2007/010056
(87) Internationale Veröffentlichungsnummer: WO 2008/071297

(56) Entgegenhaltungen:
- EP-A- 0 259 637
- EP-A- 0 827 807
- WO-A-03/064088
- WO-A-2005/080048
- DE-C1- 19 625 520
- US-A1- 2004 040 133

## Beschreibung

Die vorliegende Erfindung betrifft ein Verfahren zur Rundum-Bearbeitung von Rohlingen oder vorgearbeiteten Werkstücken mit einer Bearbeitungsmaschine, wie beispielsweise einer Drehfräsmaschine (HSTM), zu in ihrer dreidimensionalen Form abschließend bearbeiteten Bauteilen sowie eine Bearbeitungsmaschine, wie beispielsweise eine Drehfräsmaschine, zur Durchführung eines derartigen Verfahrens.

Im Bereich der Herstellung von Turbinenschaufeln werden diese üblicherweise in mehreren Stufen auf mehreren unterschiedlichen Maschinen hergestellt. Dies bedeutet, dass ein Rohling, meist ein Rechteckstab oder Rundstab, folgende Fertigungsschritte durchlaufen muss:
Im ersten Schritt wird der Rohling durch eine Zeilenfräsbearbeitung in eine Rhombusstabform gebracht.

Im zweiten Schritt wird ebenfalls durch eine Zeilenfräsbearbeitung das meiste Material im eigentlichen Blattbereich herausgefräst. Diese beiden Arbeitsschritte erfolgen auf 3-Achs-Maschinen.

Im dritten Schritt wird dann das Turbinenschaufelprofil im Blattbereich durch Kopierfräsen oder NC-Fräsen durch Schruppen, Vorschlichten und Schlichten hergestellt. Dieser Arbeitsschritt erfordert eine 4- bzw. 5-Achs-Fräsmaschine.

Im vierten Schritt werden die Übergänge vom Blattbereich zum Fuß- und/oder Kopfbereich durch NC-Fräsen hergestellt. Dieser Arbeitsschritt erfordert eine 5-Achs-Fräsmaschine.

Im fünften Schritt wird dann die Fuß- und Kopfumfangsgeometrie meist auf zwei bis vier 4-Achsen-Spezialmaschinen hergestellt.

Im letzten, sechsten Arbeitsschritt werden dann die Fuß- und Kopfstirnseiten auf einer 4-Achsen-Fräsmaschine hergestellt.

Zwischen den einzelnen Schritten sind umfangreiche Messkontrollen notwendig, um die engen Toleranzfelder einer Turbinenschaufel einhalten zu können. Zwischen diesen einzelnen Bearbeitungsschritten muss das Werkstück jeweils von Hand oder durch ein Handlingsystem umgespannt werden. Der Hauptgrund für das Umspannen liegt darin, dass die meisten Fräs-, Bohr- oder Drehmaschinen nur in der Lage sind, einzelne Bearbeitungsschritte durchzuführen, und insbesondere weil jede Fassung respektive Halterung des Werkstückes immer nur die Bearbeitung eines bestimmten Bereichs erlaubt. Diese Art der Fertigung ist sehr transport- und zeitaufwändig.

Problematisch an einer derartigen Fertigung ist, dass speziell ab dem vierten Abschnitt das Werkstück eine extrem komplexe 3-D-Form hat, die es in den nachfolgenden Abschnitten wieder in die richtige Spannposition zu bringen gilt, um das enge Toleranzfeld einhalten zu können. Hierzu sind sehr komplexe und kostenintensive Spannvorrichtungen notwendig.

Bei einer bekannten Bearbeitungsmaschine ist die X-Achse auf der Rückseite des Gestells und als Tandemachse auf der Gestellvorderseite, d.h. die Frässpindel führt die Achsbewegungen (X,Y,Z und B) aus. Das Werkstück wird zwischen zwei Tandem-X-Achsen gespannt und verfahren plus einer A-Rotationsachse. Die Turbinenschaufel wird zwischen die beiden Achsen X und U eingeklemmt. Beide Achsen werden dann als Tandemachse verfahren. Nachteilig ist, dass Tandemachsen mit langsamerer Beschleunigung fahren, da eine Achse immer die Führungsachse ist und die andere nachgesteuert wird. Dies muss so sein, weil sonst ein zu großer Schleppfehler zwischen den Achsen entsteht, was dazu führt, dass die Turbinenschaufel nicht mehr geklemmt ist.

Bei einem beispielsweise in EP 0 827 807 beschriebenen Fertigungsverfahren wird der Rohling von einem Hauptspannfutter erfasst und gehalten, während für einzelne Bearbeitungsschritte ein freies Ende des Rohlings je nach Bearbeitungsschritt mit einem Hilfsspannfuttermittel gehalten oder mit einem Werkzeug bearbeitet wird. Um die verschiedenen Bearbeitungsschritte bei dem Rohling durchführen zu können muss das Hilfsspannfuttermittel mehrfach entfernt, ausgewechselt und wieder an das freie Ende des Rohlings herangeführt werden. Während ein derartiges Fertigungsverfahren bei kleinen Werkstücken möglich erscheint, können bei großen und schweren Werkstücken oftmals die engen Toleranzfelder bei dem erneuten Wiedereinspannen des Werkstücks nicht oder nur mit einem erheblichen konstruktiven Aufwand eingehalten werden, so dass die gewünschte Fertigungspräzision nicht gewährleistet werden kann.

Es ist daher Aufgabe der vorliegenden Erfindung, ein Verfahren zur Umriss- und Stirnseitenbearbeitung eines Rohlings mit einer Bearbeitungsmaschine, wie beispielsweise einer Drehfräsmaschine, zur Verfügung zu stellen, welches die Fertigung einer Turbinenschaufel in möglichst wenigen Bearbeitungsschritten und in nur einer Aufspannung ermöglicht. Die Bearbeitungsmaschine soll dabei in der Lage sein, unterschiedliche Operationen wie Drehfräsen, Fräsen und Bohren usw. durchzuführen. Der Begriff einer Drehfräsmaschine ist in diesem Zusammenhang somit weit auszulegen, d.h. bezieht sich auf Bearbeitungsmaschinen, welche nicht nur zum Drehfräsen in der Lage sind, sondern ggf. auch fräsen, bohren, usw. können.

Die vorliegende Erfindung löst diese Aufgabe durch ein Verfahren nach Anspruch 1, indem ein Rohling zwischen einem Spannmittel (Zwei- oder Mehrbackenfutter oder Spannadapter usw.), das fest an der A-Rotationsachse montiert ist, und einem Gegenzentrum, wie einer Reitstockspitze oder dergleichen, fixiert und gespannt wird. Dann wird dieser Rohling auf dieser Drehfräsmaschine durch Einsatz der obigen Fertigungsverfahren in mehreren Bearbeitungsschritten in seine endgültige, der bestimmungsgemäßen Verwendung entsprechende Umrissform gebracht. Anschließend werden die Funktionsbereiche des Fuß- und Kopfstirnflächenbereichs ebenfalls in dieser Aufspannung soweit wie möglich hergestellt und ein Abbrechsteg an beiden Seiten hergestellt. Nach dieser Bearbeitung wird das fertig bearbeitete Bauteil von der Bearbeitungsmaschine genommen. Die beiden Abbrechstege werden von Hand entfernt und die Brechstellen von Hand geglättet.

Mit der vorliegenden Erfindung wird somit ein Verfahren zur Rundum-Bearbeitung eines Rohlings mit einer einzigen Bearbeitungsmaschine, wie beispielsweise einer Drehfräsmaschine, zur Verfügung gestellt, welche die Fertigung des Bauteils in möglichst wenigen Bearbeitungsschritten und nur einer Aufspannung ermöglichen. Die Bearbeitungsmaschine ist dabei in der Lage, unterschiedliche Operationen wie Drehfräsen, Fräsen, Bohren usw. durchzuführen.

Ein wesentlicher Aspekt der Erfindung besteht darin, den Rohling in einer einzigen Aufspannung durch Einsatz von handelsüblichen Spannmitteln wie z.B. Zwei- und Mehrbackenfutter oder Spannadapter usw. mit einer Reitstockspitze oder Gegenspindel so zu fixieren und zu klemmen, dass das Werkstück in allen Funktionsbereichen in mehreren aufeinander folgenden Bearbeitungsschritten in seine endgültige, der bestimmungsgemäßen Verwendung entsprechende Gesamtform gebracht wird.

Dies ist durchaus überraschend, denn die einzelnen Bearbeitungsschritte umfassen Drehfräsoperationen, wie unter anderem auch Schruppen und Schlichten, welche erhebliche Kräfte auf das Werkstück ausüben und welche den Fachmann bisher immer davon abgehalten haben, das Werkstück in nur einer Aufspannung auf einer einzigen Maschine in seine endgültige Form zu bringen. Üblicherweise wurde immer davon ausgegangen, dass die bei der Bearbeitung entstehenden Kräfte entweder zu einer Schädigung des Werkstückes oder zu einer ungenügenden Qualität des endgültigen Werkstücks führen (z. B. infolge von Vibrationen, Momenten usw.). Es zeigt sich nun aber, dass es möglich ist, in einer Aufspannung mit definierten Bearbeitungsschritten alle Funktionsflächen eines Werkstücks in ihre endgültige Form zu bringen und durch das Anfräsen eines Abbrechsteges einen weiteren Arbeitsschritt auf zusätzlichen Bearbeitungsmaschinen zu vermeiden.

Die Einsparung weiterer Aufspannungen auf anderen Maschinen und die Verwendung nur einer Bearbeitungsmaschine, insbesondere Drehfräsmaschine, führt zu einer erheblichen Vereinfachung des Herstellungsprozesses und zur Vermeidung von Spannfehlern. Engste Toleranzfelder sind somit herzustellen, da alle Bauteilbereiche in einer Aufspannung erzeugt werden.

Bei der bestimmungsgemäßen Gesamtform, welche mit dem vorgeschlagenen Verfahren erzielt werden kann, handelt es sich um Turbinenschaufeln, Blisks oder Radialverdichtern.

Gemäß einer ersten bevorzugten Ausführungsform der Erfindung handelt es sich beim Rohling um einen Rohling aus Metall oder einem Keramikwerkstoff in rechteckiger, zylindrischer oder beliebiger Querschnittsform, bevorzugt um einen quaderförmigen Block oder um einen Guss- oder Schmiederohling. Ebenfalls möglich ist es, den Rohling in einer bereits vorgearbeiteten Form dem erfindungsgemäßen Drehfräsverfahren zuzuführen. Überraschenderweise gelingt das erfindungsgemäße Verfahren auch bei schwierig zu bearbeitenden Werkstoffen ohne Einbuße an Qualität der endgültigen Formteile.

Gemäß einer weiteren bevorzugten Ausführungsform der Erfindung handelt es sich bei der Teilform um eine Form unter Belassung von unbearbeiteten Überständen am Kopf- und am Fußteil, wobei insbesondere bevorzugt bereits beim ersten Bearbeitungsschritt Einschnitte zwischen den Überständen und der Teilform vorgesehen werden. Als geeignet erweist sich das vorgeschlagene Verfahren z. B. zur Herstellung von Turbinenschaufeln jeglicher Art, wobei es sich bei der Teilform in diesem Fall um den Kopf der Turbinenschaufel, den Blattbereich der Turbinenschaufel und den Fuß der Turbinenschaufel handelt, und wobei am Kopf und am Fuß nach der Umrissbearbeitung in der gleichen Aufspannung die wesentlichen Funktionsflächen der Stirnseitepartien bis auf den schmalen Abbrechsteg ebenfalls hergestellt werden können.

Um das Werkstück in einer Aufspannung fertig zu bearbeiten wird das Werkstück zwischen die endlos drehende A-Achse und die Reitstockspitze am Reitstock durch Verfahren der A-Achse fixiert und gespannt. Durch Verfahren des X-Schlittens, auf dem diese Maschinenkomponenten montiert sind, werden die Raumrichtungen X und eine Drehbewegung A erbracht. Die zwei anderen Raumrichtungen Y,Z und die zweite Drehbewegung B wird dadurch erzielt, dass die Drehfrässpindel mit eingespanntem Werkzeug in eine B-Achse montiert ist und diese Drehachse mittels zweier um 90° versetzter Linearachsen verfahren wird.

Bei langen Werkstücken bleiben alle Maschinenkomponenten bis auf die X-Achse gleich. Sie wird in verschiedenen Stufungen den jeweiligen Werkstücklängen angepasst. Somit ist die Basismaschine, wie auch alle ihrer Varianten, extrem flexibel gegenüber den unterschiedlichen Längenanforderungen von Werkstücken. Bei großen, schweren Werkstücken wird anstelle des Reitstockes eine zweite A - Rotationsachse (Gegenspindel) montiert. Somit kann das aufgenommene Werkstückgewicht verdoppelt werden.

Ein weiterer Vorteil einer solchen Doppelspindelaufnahme liegt darin, dass die langen Werkstücke, die meist sehr schwingungsanfällig sind, durch eine leichte gegenläufige Drehung der beiden A-Drehachsen verspannt werden können, was zu einer Erhöhung ihrer Bauteilsteifigkeit führt. Somit sind sie nicht mehr so schwingungsanfällig wie zuvor. Dieser Verspannungszustand kann elektronisch registriert werden und während des gesamten weiteren Bearbeitungsschrittes gezielt verstellt werden. Die entsprechend anliegende Torsion auf dem Werkstück kann im Programm zur elektronischen Steuerung der Frässpindel berücksichtigt und korrigiert werden.

Gemäß einer bevorzugten Ausführungsform der Erfindung kann die endgültige Gesamtform nach den Bearbeitungsschritten gereinigt und/oder vermessen und wenn nötig noch korrigiert werden, da das Werkstück seine Spannposition nicht verliert. Die entsprechenden Mittel zur Durchführung dieser Schritte, welche auch die Anbringung eines Bauteil-Materialcodes umfassen können, können vorzugsweise auf der gleichen Bearbeitungsmaschine, insbesondere Drehfräsmaschine, durchgeführt werden, wodurch eine Eindeutigkeit der Werkstücke realisiert wird.

Das vorliegende Verfahren erweist sich als besonders geeignet für die Herstellung von Turbinenschaufeln mit oder ohne Deckband. Insbesondere bei der Herstellung von derartigen großen Komponenten mit einer Oberfläche im Bereich von N4 bis N5 bei Toleranzen von +/- 0,003 mm, von einer Länge im Bereich von 20 bis 2500 mm, bei einem rotierenden Durchmesser von 10 bis 600 mm und einem Gewicht von 1 bis 200 kg kann das vorliegende Verfahren in einer einzigen Bearbeitungsmaschine, insbesondere Drehfräsmaschine, angewendet werden, ohne dass dabei Probleme der Stabilität (trotz großer Hebel) oder der Zugänglichkeit durch den Bearbeitungskopf auftreten.

Da die Basismaschine von Grund auf vorzugsweise als Baukastensystemmaschine aufgebaut ist, lässt sich das Einsatzgebiet der Bearbeitungsmaschine, wie einer Drehfräsmaschine, durch Hinzubringen von weiteren Baukastenkomponenten, wie z.B. Rundtischen und einem Winkelgestell, auch auf dicke kurze Werkstücke leicht erweitern. Somit ist das Einsatzgebiet dieser Maschine nicht nur auf kurze und lange schlanke Werkstücke begrenzt, sondern es können auch sehr dicke kurze vorbearbeitete oder rohe Werkstücke optimal in einer Aufspannung hergestellt werden, wie z.B. Blisks oder Radialverdichter.

Wesentlich ist, dass die Turbinenschaufel oder ein sonstiges Werkstück nur zwischen der U-Achse und der A-Achse geklemmt wird. Beide Achsen sind auf der X-Achse montiert. Zur Bearbeitung verfährt nur die X-Achse als einfache Linearachse und keine Tandemachse. Hierdurch lassen sich sehr hohe Beschleunigungen fahren. Die U-Achse hat nur die statische Funktion als Klemmachse. Alle Funktionsflächen des Werkstücks, insbesondere einer Turbinenschaufel, werden in einer einzigen Aufspannung erzeugt. Um eine Turbinenschaufel einbaufertig zu machen, wird nach dem Abbrechen der Stege am Fuß ein Freistich maschinell gefräst, oder man schleift diesen per Hand. Die Bearbeitungsmaschine ist so modular ausgelegt, dass auf ihr durch eine einfache Modulierung der Bauteilkomponenten auch Blisks und Radialverdichter hergestellt werden können.

Die Turbinenschaufel wird, wenn überhaupt, nur auf einer Seite in ein beliebiges Spannmittel (Zwei- bzw. Mehrbackenfutter usw.) aufgenommen. Auf der anderen Seite wird sie mittels eines Reitstockes, der die unterschiedlichsten Zentriereinheiten besitzen kann, oder einer Gegenspindel aufgenommen. Es gibt nur einen Spänekanal vor der Maschine und nicht in der Mitte und/oder hinter dem Gestell. Die Maschine ist so konzipiert, dass sie mit Handbeladung bis hin zur vollautomatischen Stangenbeladung gefahren werden kann.

Die zwei Raumkoordinaten Y,Z und eine Drehbewegung B, die die Frässpindel in der Drehfräsmaschine durchführen kann, wurden so gewählt bzw. angeordnet, dass ein extrem schneller Werkzeugwechsel möglich ist. Da die Frässpindel keinerlei X-Bewegung durchführen muss, bleibt diese Spann-zu-Spannzeit immer konstant, was eine erhebliche Zeiteinsparung erbringt, da wegen der komplexen Formen des Werkstückes sehr viele Werkzeuge zum Einsatz kommen.

Bei der bekannten Maschine sind dagegen zum Werkzeugwechsel drei Raumkoordinaten X,Y,Z und eine Drehbewegung B notwendig, wobei die X-Bewegung einen extrem langen Weg fahren muss, der zudem nie konstant ist. Somit ist die Spann-zu-Spannzeit um einen Faktor 8 höher als bei der erfindungsgemäßen Maschine.

Weitere bevorzugte Ausführungsformen des erfindungsgemäßen Verfahrens sind Gegenstand weiterer Ansprüche bzw. nachfolgend beschrieben.

Die Erfindung wird nachfolgend anhand von Ausführungsbeispielen im Zusammenhang mit den Figuren näher erläutert. Es zeigen:
Fig. 1 eine Fräsmaschine mit 11 Achsen in perspektivischer Ansicht,
Fig. 2 eine weitere Ansicht der Fräsmaschine gemäß Fig. 1 mit Doppel-A-Achse,
Fig. 3 eine modular erzeugte Variante der Fräsmaschine gemäß Fig. 2 für die Bearbeitung von im Durchmesser mittelgroßen, hohen, zylindrischen bzw. scheibenförmigen Werkstücken durch eine Wippe und zusätzliche C-Rotoationsachse,
Fig. 4 eine modular erzeugte Variante der Fräsmaschine gemäß Fig. 1 für die Bearbeitung von im Durchmesser sehr großen, mittelhohen und dünnen scheibenförmigen Werkstücke mit einer C-Rotationsachse, einem Winkeltisch und einer weiteren D-Rotationsachse,
Fig. 5 eine Ansicht der Be- und Entladeinrichtung von der Seite,
Fig. 6 eine Ansicht der Be- und Entladeinrichtung von oben,
Fig. 7 eine Ansicht der Maschine mit einem Stangenautomat als Be- Entladeinrichtung und
Fig. 8 - 13 jeweils in einer räumlichen Darstellung und einer schematischen Stirnansicht eine zu bearbeitende Turbinenschaufel in mehreren Bearbeitungsstufen.

In der Beschreibung und Zeichnung werden u.a. die folgenden Bezeichnungen der Bauteilkomponenten verwendet:

| | |
|---|---|
| G | Maschinengrundgestell |
| FBY | Hintere Y-Führungsbahn |
| GSY | Y-Grundschlitten |
| FBZ | Z-Führungsbahn |
| GSZ | Z-Grundschlitten |
| RAB | B-Rotationsachse |
| HSSP | Hochfrequenzfrässpindel |
| FBX | Vordere X-Führungsbahn |
| GSX | X-Grundschlitten |
| RAAR | Rechte A-Rotationsachse |
| FBU | U-Führungsbahn |
| GSU | U-Grundschlitten |
| RST | Reitstock |
| PN | Pinole -Reitstock |
| PS | Pinolenspitze |
| WKZM | Werkzeugmagazin |
| DAWG | Doppelarmwerkzeuggreifer |
| DH | Hubautomatik des Doppelarmwerkzeuggreifer |
| DW | Hubarm des Werkzeugmagazins |
| SPK | Spänekanal |
| RAAL | Linke A-Rotationsachse |
| GSXR | X-Rotationsachsenschlitten |
| RAC | C-Rotationsachse |
| WE | Winkeleinheit |
| RAD | D-Rotationsachse |
| RSS | Spannmittel D-Rotationsachse |

Die dargestellte Bearbeitungsmaschine, beispielsweise eine Hochgeschwindigkeits-Drehfräsmaschine (HSTM), ist so aufgebaut, dass man mit dem Basiskonzept der Maschine Werkstücke mit einem Umlaufdurchmesser von bis zu 600 mm und einer Länge von bis zu 2.400 mm mittels des Fertigungsverfahren "Drehfräsen" und all seinen Varianten herstellen kann.

Durch eine weitere Konzeptvariante, die auf dem Basiskonzept aufbaut, lassen sich Werkstücke mit einem Umlaufdurchmesser von bis zu 1.200 mm und einer Länge von bis zu 800 mm mittels des Fertigungsverfahrens "Drehfräsen" und all seinen Varianten herstellen. Diese Werkstücke können sowohl komplexer rotationssymmetrischer Natur sein als auch frei in ihrer Querschnittsgeometrie wie z.B. das gesamte Spektrum der Turbinenschaufeln, aber auch komplexe Radialverdichter oder Blisk-Scheiben. Durch den Einsatz von mehrschneidigen Fräswerkzeugen usw. wird ein Vielfaches an spezifischem Zerspanungsvolumen erzielt im Vergleich zu einschneidigen Werkzeugen.

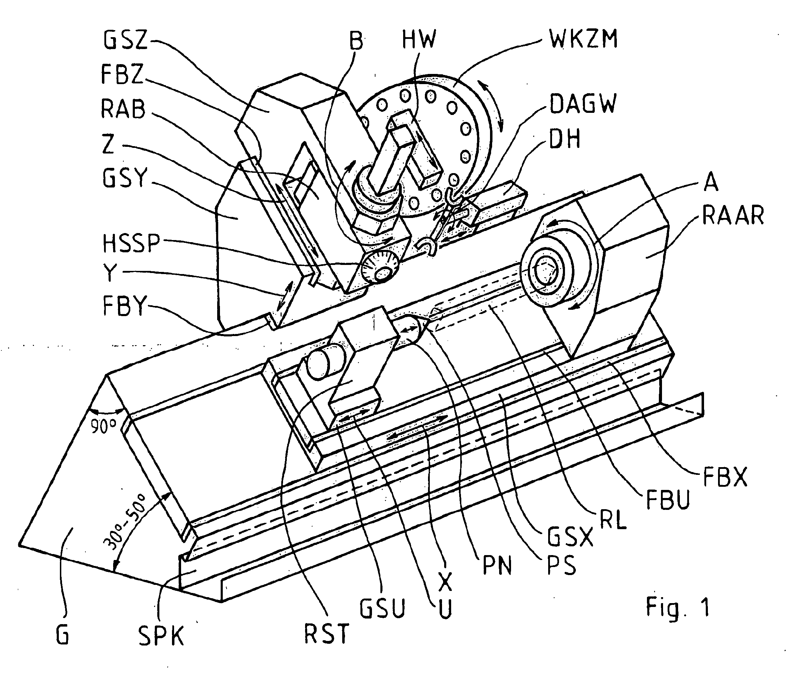

Fig. 1 zeigt das Grundkonzept einer HSTM-Bearbeitungsmaschine in perspektivischer Ansicht. Die HSTM-Bearbeitungsmaschine hat ein Grundgestell G. Die Länge "X" des Grundgestells G ist die einzige Variable bei allen Modellvarianten und -typen. Sie ist abgeleitet von den Längen der zu bearbeitenden Werkstücke, z.B. Turbinenschaufeln.

Durch eine Ergänzung von gleichen und anderen Maschinenkomponenten wird diese Drehfräsmaschine für eine Vielzahl von anderen Werkstückanforderungen nutzbar. Diese variable Konzeption spart vor allem Herstellkosten.

Die kleinste Grundgestelllänge ist so ausgelegt, dass man einen Rohling RL einspannen kann, aus dem dann eine Turbinenschaufel entsteht, die eine maximale Länge von 300 mm haben kann, oder ein Blisk oder Radialverdichter mit einem Durchmesser von bis zu 500 mm. Die Grundgestelllänge in "X" ist hierbei so gewählt, dass man mit der um 90° gedrehten Frässpindel HSSP an einem in der Werkstück-Rotationsachse RAAR eingespannten Rohling von bis zu 500 mm Länge eine Zentrierung, einen Zapfen oder eine andere Spannaufnahme am freien anderen Rohteilende fertigen kann.

Für die längeren Turbinenschaufeln wird das Grundgestell nur in dieser Länge jeweils um den Faktor 2x("X"-300) angepasst, z.B. für eine Turbinenschaufel mit Lx=1000 und Basislänge Lo/300 =3600 mm der 300er Maschine:
Lo/300 = 3600 mm plus 2x(1000-300) also 3600 mm+1400 mm = 5000 mm usw.

Auf dem Grundgestell G ist auf der Hinterseite in der Mitte des Grundgestells G in einem definierten Winkel, der zwischen 30 und 50° liegt, eine Führungsbahn FBY für eine Grundschlitteneinheiten GSY angebracht. Mit ihr wird der Y-Hub "Y" gefahren.

Diese Grundschlitteneinheit GSY ist so ausgelegt, dass 90° zur "Y" Bahn eine Führungsbahn FBZ angebracht ist, auf die der Z-RAM GSZ montiert ist. Mit ihm wird der Z-Hub "Z" gefahren. Der Z-RAM GSZ ist zum Maschinenraum hin als Gabelkopf-Drehachse RAB ausgelegt, in der die Hochfrequenzschnelllaufspindel HSSP so montiert ist, dass sie eine Schwenkbewegung um die B-Rotations-Achse "B" von mehr als +/- 90° durchführen kann.

Die Hochfrequenzschnelllaufspindel HSSP und somit das Fräswerkzeug machen die Achsenbewegungen "Y","Z" und "B". Auf der Vorderseite des Grundgestells G, das exakt im Winkel von 90° zur Führungsbahn FBY steht, sind die beiden Führungsbahnen FBX angebracht, auf denen sich die Schlitteneinheit GSX bewegt. Mit ihr wird der X-Hub "X" gefahren.

Auf der Schlitteneinheit GSX ist auf der rechten Seite die Werkstück-Rotationsachse RAAR fest montiert. Sie bildet die Turbinenschaufeldrehachse "A". Zur Aufnahme von Spannadaptern oder Mehrbackenfuttern ist diese Drehachse mit einer Standard-HSK-Schnittstelle ausgelegt. Die Werkstück-Rotationsachse RAAR macht eine endlose Winkelverstellung (360° endlos).

Vor der Werkstück-Rotationsachse RAAR sind in der Schlitteneinheit GSX die beiden Führungsbahnen FBU angebracht, auf denen sich die Schlitteneinheit GSU bewegt. Mit ihr wird der U-Hub "U" zum Spannen der verschiedenen Turbinenschaufellängen gefahren.

Auf der Schlitteneinheit GSU ist im Normalfall der Reitstock RST fest montiert. Er besitzt eine Pinole PN, die je nach Turbinenschaufellänge einen zweiten Spannhub von 30 - 180 mm hat. Die Pinolenspitze PS ist so ausgelegt, dass sie entweder eine feste oder mitlaufende Spitze, eine Spannzange oder Spanndorn oder beides besitzt. Mit ihr wird der Rohling RL auf der linken Seite aufgenommen und gehalten. Der Rohling RL macht somit die Achsenbewegungen "X" und "A".

Vor den Führungsbahnen FBX ist am unteren Gestellrand der Spänekanal SPK integriert. Durch die Schrägstellung der X-Gestellfläche gelangen somit alle Späne ohne weitere Hilfsmittel automatisch in den Spänekanal.

Mit der Werkstück-Rotationsachse RAAR und dem Reitstock RST/PN können die geklemmten Rohteile sowohl im Drehbetrieb als auch im Fräsbetrieb gefahren werden. Die Hochfrequenzschnelllaufspindel HSSP ist in der B-Rotations-Achse RAB durch ein Schnellspannsystem fixiert. Die Energie- und Signalübertragung von der Maschine zur Hochfrequenzschnelllaufspindel erfolgt über eine Steckschnittstelle.

Rechts (wie gezeichnet) oder links neben den Führungsbahnen FBY ist am hinteren Grundgestell G ein Scheibenmagazin SM und ein Doppelarmgreiferwechsler DAGW montiert. Der Doppelarmgreiferwechsler macht eine Hubbewegung DH und eine Drehbewegung von +/- 90°.

Ein Werkzeugwechsel läuft wie folgt ab: Die Hochfrequenzschnelllaufspindel HSSP wird zum Werkzeugwechselpunkt WKZWP durch die beiden Linearbewegungen "Y" und "Z" plus eine Drehbewegung in "B" so gefahren, dass sie vor dem um 90° gedrehten Doppelarmgreiferwechsler DAGW steht. Jetzt fährt die Hochfrequenzschnelllaufspindel HSSP einen definierten "-Z"-Hub und legt somit das alte Werkzeug in die eine Seite des offenen Doppelarmgreiferwechslers DAGW. Die Spannung des Werkzeugs WKZ wird in der Hochfrequenzschnelllaufspindel HSSP entriegelt und mittels eines definierten "-H1"-Rückwärtshubes des Doppelarmgreifers DH aus der Hochfrequenzschnelllaufspindel HSSP gezogen. Danach wird der Doppelarmgreiferwechsler DAGW um 180° gedreht und mittels definierten "+H1"-Vorwärtshubes des Doppelarmgreifers DH in die Hochfrequenzschnelllaufspindel HSSP geschoben. Nach der Spannung des Werkzeugs WKZ fährt die Hochfrequenzschnelllaufspindel HSSP mit einem definierten "+Z"-Hub nach vorne, wodurch das Werkzeug WKZ aus dem Doppelarmgreifer gezogen wird. Die Hochfrequenzschnelllaufspindel fährt mittels "Y","Z"-Hub und "B"-Drehung zum neuen Einsatzpunkt.

Der Doppelarmgreifer wird mittels eines definierten "-H2"-Rückhubs DH so weit nach hinten gefahren, bis das Werkzeug WKZ in einen leeren Magazinplatz des Scheibenmagazins SM gelangt und dort verriegelt wird.

Die Magazinscheibe des Scheibenmagazins SM zieht mittels eines definierten "-ZZ"-Hubes das Werkzeug WKZ aus dem Doppelarmgreifer. Durch eine vorgegebene Drehung der Magazinscheibe wird ein neues Werkzeug WKZ in Übergabeposition ÜP gebracht. Durch einen definierten "+ZZ"-Hub des Scheibenmagazins wird das Werkzeug WKZ in den Doppelarmgreifer geschoben und dort verriegelt. Der Doppelarmgreifer DAWG fährt zum Wartepunkt des Systems nach vorne, indem seine Hubautomatik DH einen definierten "+H3"-Hub macht, wodurch das Werkzeug WKZ aus der Aufnahme des Scheibenmagazins SM gezogen wird. Somit wird eine Werkzeugwechselzeit von ca. 5 sec. erzielt.

Nachfolgend werden Ausbaustufen der Maschine beschrieben:
Doppel-A-Achsenmaschine:

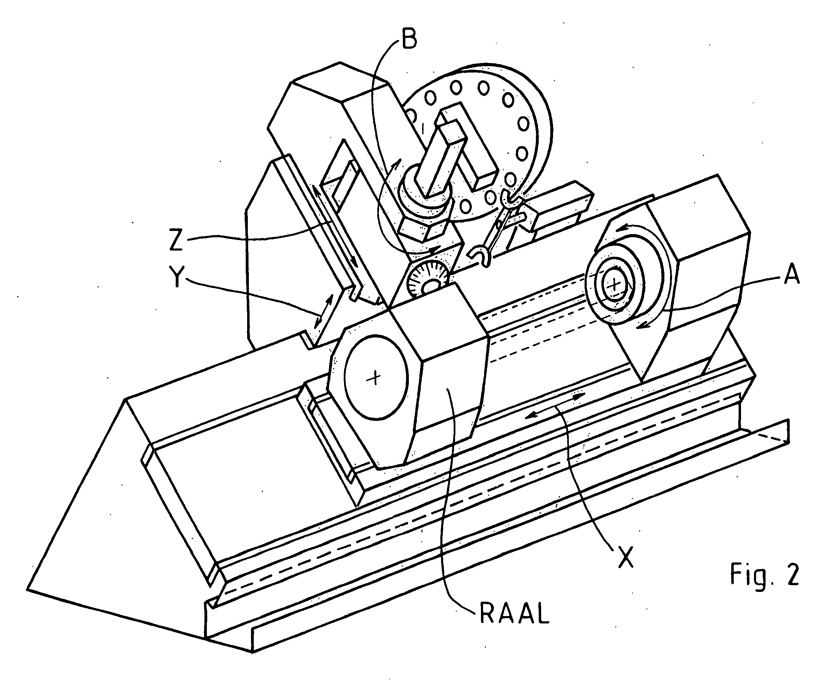

   Fig. 2 zeigt diese Ausbaustufe. Hier wird anstelle des Reitstockes eine zweite Werkstück-Rotationsachse RAAL montiert, die baugleich zu der Werkstück-Rotationsachse RAAR ist; somit kann das Rohteil von beiden Achsen angetrieben werden. Ferner kann das Rohteil durch eine unterschiedliche Ansteuerung dieser beiden Rotationsachsen einer Torsionsspannung unterzogen werden, welche bei dünnen Rohteilen zu einer Versteifung der Rohteile führt, bevor dann beide Achsen synchron angetrieben werden.

Durch die beiden Werkstück-Rotationsachsen RAAR und RAAL kann das Werkstückgewicht 160 kg verdoppelt werden. Somit ist diese Ausbaustufe für Maschinentypen von Bedeutung, bei denen überwiegend schwere Rohteile zur Bearbeitung kommen.

### Radialverdichtermaschine:

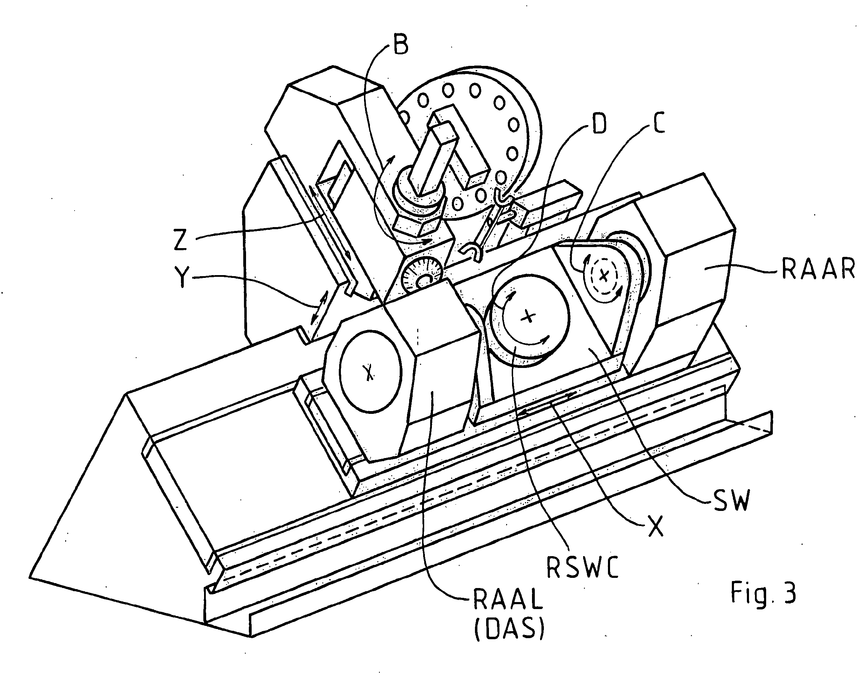

Fig. 3 zeigt die erste Ausbaustufe für im Durchmesser mittelgroße, hohe, zylindrische, bzw. scheibenförmige Werkstücke bis zu 120 kg Gewicht, wie z.B. Radialverdichter usw. Bei dieser Ausbaustufe wird zwischen die beiden Rotationsachsen RAAR und RAAL eine Wippe WP montiert. In dieser Wippe ist dann die C-Rotations-Achse RAC montiert. Auf dieser C-Rotations-Achse RAC ist dann das Rotationsspannsysteme RSS montiert, welches das Werkstück bis zu einem Durchmesser von 800 mm und einer Höhe von bis 500 mm aufnehmen kann.

Für eine leistungsschwächere Variante kann die zweite A-Rotations-Achse RAAL gegen eine nicht angetriebene Drehabstützung DAS ausgetauscht werden. Die beiden A-Rotations-Achsen RAAR und RAAL oder die A-Rotations-Achse RAAR mit der gegenüberliegenden, nicht angetriebenen Drehabstützung DAS machen eine Winkelverstellung von +/-150° oder mehr. Die C-Rotations-Achse RAC macht eine endlose Winkelverstellung (360° endlos).

### Bliskmaschine:

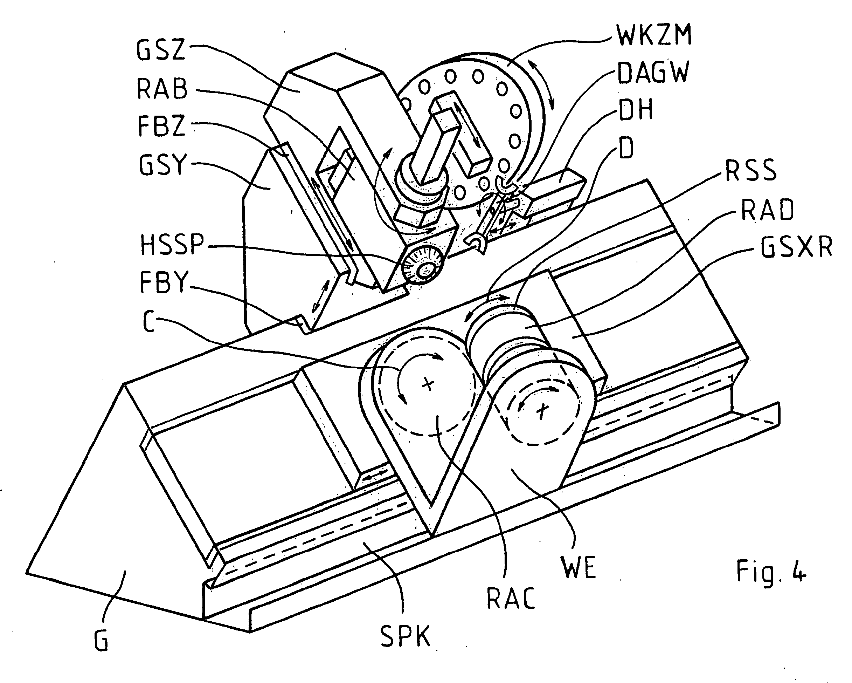

Fig. 4 zeigt eine zweite Ausbaustufe für im Durchmesser sehr große, mittelhohe und dünne scheibenförmige Werkstücke bis zu 80 kg Gewicht, wie z.B. Blisks usw. Bei dieser Ausbaustufe wird anstelle der Schlitteneinheit GSX, auf der die Werkstück-Rotationsachsen RAAR und die Schlitteneinheit GSU mit dem Reitstock RST montiert sind, eine Schlitteneinheit GSXR montiert, in der die obige C-Rotations-Achse RAC integriert ist. Auf dieser C-Rotations-Achse RAC ist im Winkel von 90° die D-Rotations-Achse RAD montiert, auf der die unterschiedlichen Rotationsspannsysteme RSS montiert werden, welche Werkstücke bis zu einem Durchmesser von 1.200 mm und einer Höhe von bis 400 mm aufnehmen können. Vorzugsweise wird hier aber eine Scheibenbearbeitung wie z.B. Blisks vorgenommen.

Die C-Rotations-Achse RAC macht eine Winkelverstellung von +/-120° oder mehr. Die D-Rotations-Achse RAD macht eine endlose Winkelverstellung (360° endlos).

Bei der Maschinenvariante Fig. 3 und 4 kann auch bei einer einfachen Ausführung auf die B-Rotationsachse RAB verzichtet werden.

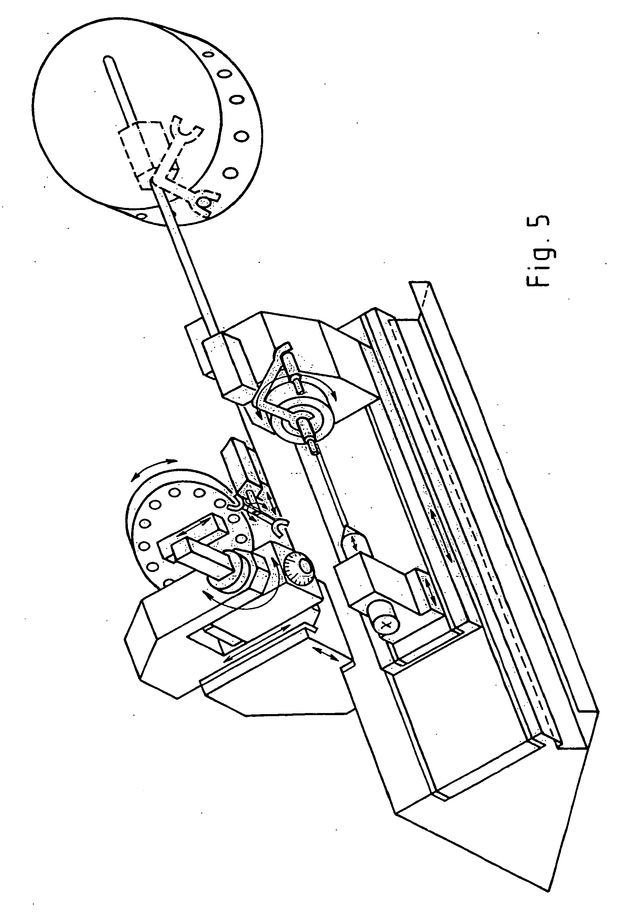

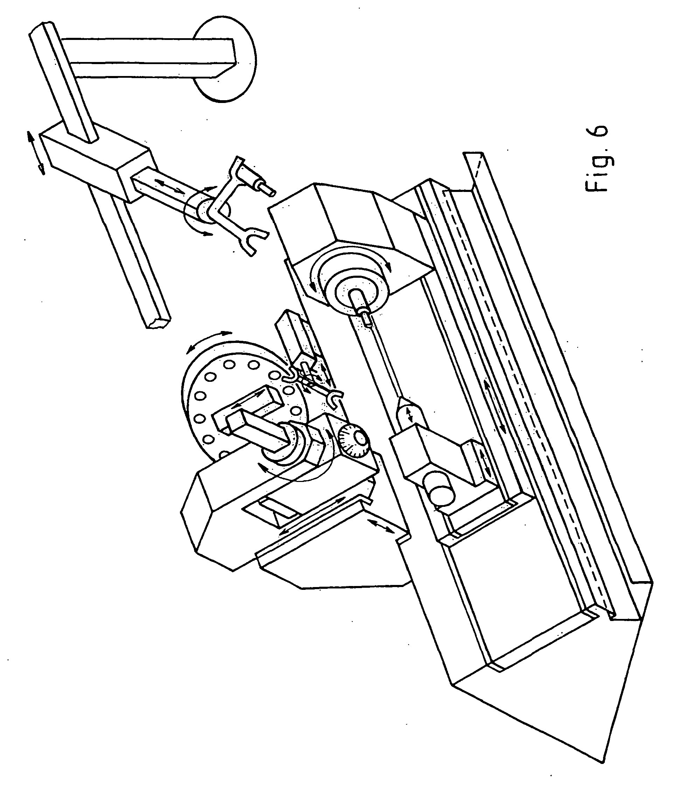

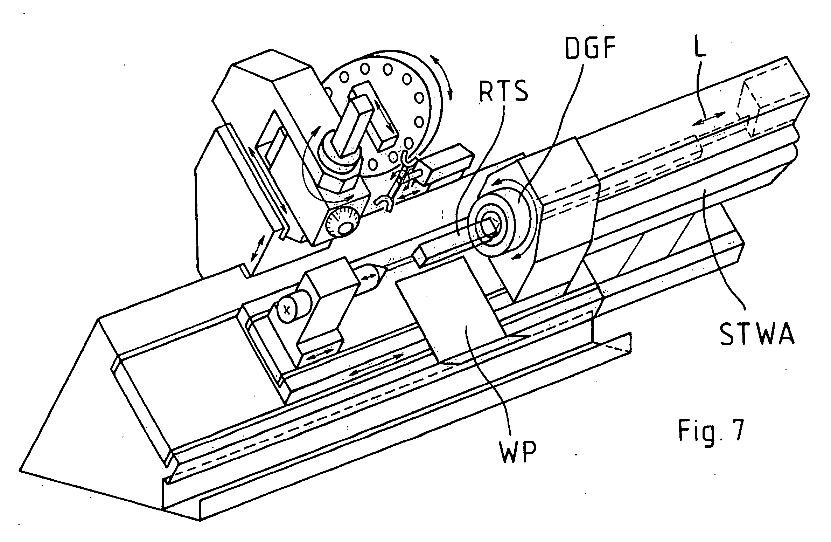

Nachfolgend werden Automatisierungs-Ausbaustufen beschrieben:
Be- und Endladeeinrichtungen:
   Die Grundmaschine wie auch die Ausbaustufe mit Gegenspindel oder die zur Bearbeitung von Blisks oder Radialverdichtern bestimmte Maschine werden normalerweise von Hand beladen. Bei all diesen Maschinentypen lässt sich aber auch durch das Anbringen von unterschiedlichen Be- und Entladeinheiten der Werkstückbestückungsvorgang automatisieren. Dies sind:
   a.) Beladung von der Seite (z.B. rechts) (Fig. 5): Hier wird ein auf einer Linearführungsbahn montierter Doppelarmgreifer oberhalb der Werkstück-Rotationsachse RAAR durch die rechte Kabinenwand montiert. Mit ihm werden entweder die Rohteile und fertige Werkstücke direkt oder mittels Hilfe eines Adapters vom Rohteilemagazin zur Spannstellenaufnahme in die Werkstück-Rotationsachse RAAR gebracht.
   b.) Beladung von oben (Fig. 6): Die Beladung von oben erfolgt mittels eines Linearhandlingsystems. Am Handlingarm, der durch die obere Dachluke in den Maschinenraum nach unten hinein gefahren wird, ist bei kleinen Werkstücken ein Doppelarmgreifer montiert. Mit ihm werden entweder die Rohteile und fertigen Werkstücke direkt oder mittels Hilfe eines Adapters vom Rohteilemagazin zur Spannstellenaufnahme in die Werkstück-Rotationsachse RAAR gebracht. Bei großen, schweren Werkstücken erfolgt die Be- und Entladung mittels zweier Handlingarme.
   c.) Beladung durch einen Stangenautomaten (Fig. 7): Bei kleinen Turbinenschaufeln (<500 mm Läge) wird hinter der Hochfrequenzschnelllaufspindel HSSP auf der Schlitteneinheit GSX ein handelsüblicher Stangenwechselautomat STWA montiert, der mitfährt. Der Rohteilwechsel wird hier wie folgt durchgeführt: Die fertige Turbinenschaufel wird mit einem geeigneten Werkzeug (z.B. Schaftfräser) von der im Durchgangsfutter DGF der Turbinenschaufel-Rotationsachse RAAR gespannten Rohteilstange RTS getrennt und mittels einer Wippe WP, die unter der Turbinenschaufel hochgeklappt wird, aufgefangen.
      Danach wird das Durchgangsfutter DGF geöffnet und die Rohteilstange RTS mittels des Stangenwechselautomat STWA um einen definierten Hub "L" (= Funktion der - Turbinenschaufellänge) nach vorne geschoben. Durch Schließen des Durchgangsfutters DGF wird die Rohteilstange RTS gespannt. Danach wird mittels der um 90° gedrehten Hochfrequenzschnelllaufspindel HSSP am offenen Ende der Rohteilstange RTS ein neues Spann- oder Fixierzentrum angearbeitet (Zentrierung, Zapfen oder eine andere Spannaufnahme).
      Durch Beifahren des Reitstockes RST in das neue abgearbeitete Spann- oder Fixierzentrum wird das Rohteil RTS dann zwischen der Turbinenschaufel-Rotationsachse RAAR und dem Reitstock RST geklemmt. Diese Ausbaustufe ist vor allem bei kleinen, kurzen Turbinenschaufeln von Bedeutung. Hier kommen die üblichen Stangenlängen von bis zu 6 m zum Einsatz.
   d.) Die Be- und Endladeeinrichtungen von a.) und b.) können auch zum Wechsel von Blisks oder Radialverdichtern eingesetzt werden. Hierzu werden speziell ausgelegte Zangensysteme an die Handlingsarme oder Doppelarme montiert.

Diese Be- und Entladeinrichtungen kommen auch bei den anderen Maschinenvarianten voll zur Anwehdung. Hierbei werden ausschließlich nur die Greiferzangen der jeweiligen Werkstückkontur angepasst.

Das Be- und Entladen der Maschine wird wie folgt ausgeführt: Hierzu wird ein Rohling beliebiger Form von Hand und/oder mittels eines Handlingsystems in die Drehfräsmaschine, die auch in einer flexiblen Zelle stehen kann, gebracht und nach der Bearbeitung durch die gleichen Transportsysteme wieder herausgeholt.

Hierzu kommen die nachstehend beschriebenen unterschiedlichen Verfahren zur Anwendung:
Bei der Be- und Entladung des Rohteils mittels eines Spannadapters wird der Rohling außerhalb der Bearbeitungsmaschine von Hand oder mittels eines automatisch gesteuertem Spannsystems (mit oder ohne Fixier- und Spannhilfsflächen) auf einem handelsüblichen Spannadapter befestigt. Zur Beladung der Maschine greift das Handlingsystem immer nur den genormten Spannadapter und bringt diesen wie ein Werkzeug zur Aufnahmestelle der A-Rotationsachse, wo er gleich einem Werkzeug mittels einer HSK-Schnittstelle fixiert und gespannt wird.

Der Vorteil besteht in einer einfachen Gestaltung der Greiferzangen des Handlingsystems. Der Greiferhub ist immer gleich. Die Steuerung ist einfach. Nachteile bestehen darin, dass bei kleinen, leichten Werkstücken immer der schwere Spannadapter mit gehandhabt werden muss. Bei schweren und langen Werkstücken muss man mit zwei Spannadaptern arbeiten. Der Personalaufwand außerhalb der Maschine ist hoch. Die zusätzlichen notwendigen Fixier- und Spannhilfsflächen sind ein zusätzliches weiches Glied im Gesamtsystem. Als Spannhilfsflächen kommen hier vor allem der Parallelsteg, eine Schwalbenschwanzfixierung oder ein Zylinderfixierung in Betracht.

Bei der Be- und Entladung des Rohteils ohne Spannadapter wird der Rohling direkt von Hand oder mittels eines automatisch gesteuerten Greifer-Handlingsystems mit oder ohne Fixier- und Spannhilfsflächen in die Zwei- oder Mehrbackenfutterspannsysteme oder Sonderspannhilfsmittel gebracht. Zur Beladung der Maschine greift das Handlingsystem direkt das Rohteil mit Parallelgreiferzangen und zwar entweder direkt an der Außenseite des Rohteils oder an dessen Hilfsfixierflächen und schiebt somit das Rohteil von oben in die Spannmittel ein.

Nach dem Spannen des Rohteils im Spannmittel wird das Gegenzentrum, welches zur Fixierung und Stabilisierung des Rohteils im Bearbeitungsprozess benötigt wird, wenn es nicht am Rohling vorher angearbeitet wurde, mittels der um 90° geschwenkten HSSP und den erforderlichen Werkzeugen auf der Bearbeitungsmaschine hergestellt. Danach wird dann der Reitstock mit seiner Reitstockspitze, die stehend oder mitlaufend ausgestaltet ist, oder einer anderen Fixier- und Klemmung soweit durch die U-Schlitteneinheit beigefahren, dass der Rohling zwischen dem Reitstock und der A-Rotationsachse fest eingeklemmt ist. Durch eine zusätzliche, aber nicht unbedingt notwendige Reitstockpinole PN kann dieser Einklemmdruck während des Zerspanungsprozesses verändert werden, um die Schwingungsanfälligkeit und das Steifheitsverhalten des labilen Rohlings positiv zu beeinflussen. Bei einer Zapfenfixierung und -klemmung kann der Rohling sogar auf Zug gesetzt werden.

Bei langen oder sehr schweren Rohlingen können zwei Parallelgreifer eingesetzt werden. Bei Rohlingen mit angearbeiteten Fixierstellen haben die Greifer eine spezielle Hilfsform, die ein Herausfallen verhindern und eine zusätzliche bessere Fixierung gewährleisten soll.

Zur Entladung eines fertigen Werkstückes wird die gleiche Greiferzange benutzt. Man greift hier beim Eingreifersystem das Werkstück an seiner Parallelfläche am Spannmittel, löst dann die Spannung und hebt das fertige Werkstück nach oben oder seitlich heraus. Bei langen oder schweren fertigen Werkstücken können zwei Parallelgreifer eingesetzt werden. Hier wird das Werkstück entweder an den beiden Parallelflächen an den Spannmittel, oder an den Abbrechstegflächen usw. gegriffen. Danach wird die Spannung gelöst und das fertige Werkstück nach oben oder seitlich herausgehoben.

Um beide Vorgänge zeitlich zu optimieren, kommt hier oftmals ein Doppelarmgreifer zum Einsatz, mit dem zuerst das fertige Werkstück aus dem Spannmittel herausgehoben wird und dann der Rohling durch eine 90 bis 360° -Drehung des Doppelarmgreifers sofort in seine Spannposition gebracht wird. Vorteile bestehen darin, dass keine schweren Spannadapter notwendig sind. Der Personalaufwand außerhalb der Maschine ist gering. Die Steuerung ist einfach. Ein Nachteil besteht darin, dass die Greiferzangenstruktur etwas komplizierter ist, da das Anbringen von Hilfsfixierflächen notwendig ist.

Guss- oder Schmiederohlinge können nach dem gleichem Prinzip be- und entladen werden. Um die Greiferzangenstruktur vereinfachen zu können, werden diese Rohteile oftmals mit Hilfsflächen ausgestattet.

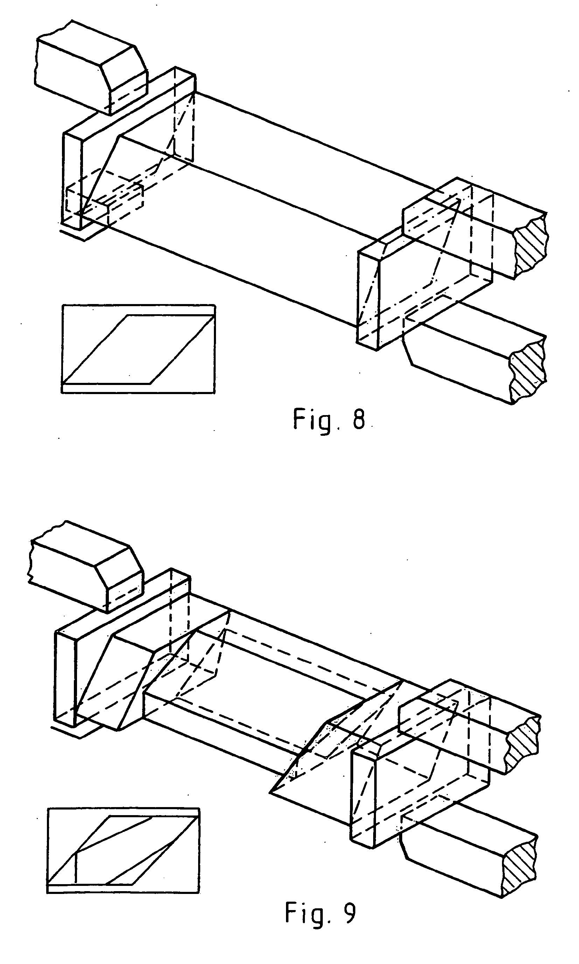

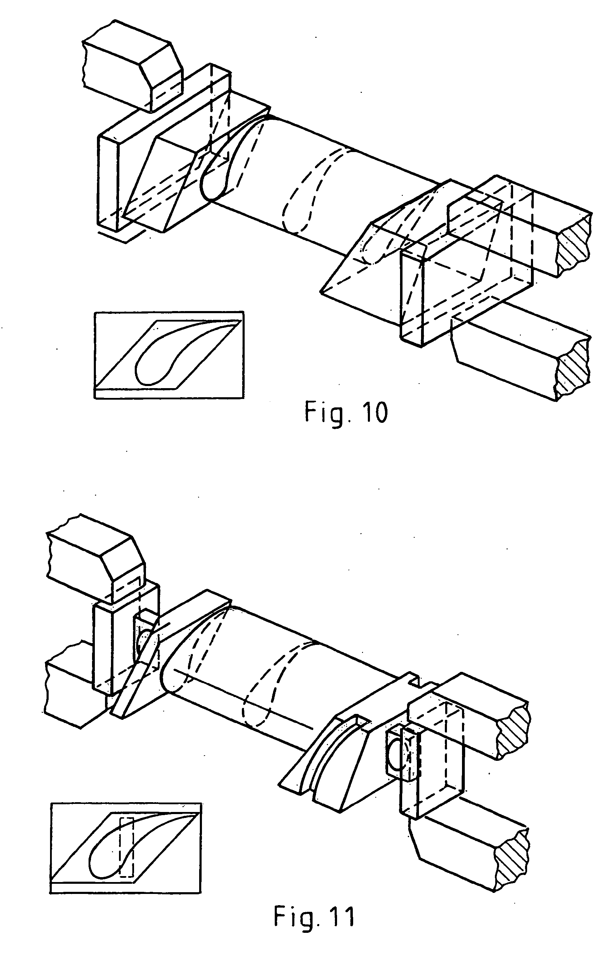

In der Drehfräsmaschine werden die folgenden Fertigungsschritte ausgeführt, die in den Fig. 8 - 13 jeweils anhand einer Turbinenschaufel in einer räumlichen Darstellung und einer schematischen Stirnansicht dargestellt sind. In den Fig. 8 - 11 ist die Bearbeitung einer Turbinenschaufel dargestellt, die an beiden Enden in einem Spannfutter eingespannt ist.
A) Im ersten Bearbeitungsschritt in der Aufspannung zwischen der A-Rotationsachse und der U- Fixier- und Klemmachse werden alle Schruppoperationen bis auf ein definiertes Aufmass zur Endkontur des Rhombus durchgeführt (Fig. 8). Bei einer Turbinenschaufel sind somit die maximalen Umrisskonturen an Fuß-, Kanal- und Kopfbereich bearbeitet. Hierzu werden die Schruppwerkzeuge in die Hochfrequenzfrässpindel HSSP mittels eines integrierten Werkzeugwechslers gespannt. Das Schruppfräsen jeglicher Art selbst erfolgt mittels eines NC-Programms.
B) Im zweiten Schritt wird dann der Kanalbereich der Turbinenschaufel herausgefräst (Fig. 9). Hierzu können in den meisten Fällen die gleichen Werkzeuge eingesetzt werden. Diese Schruppoperationen können sowohl wie beschrieben in mehreren Schritten als auch in einem einzigen Schritt durch leistungsfähige Frästechnologien wie Spiralhelifräsen ausgeführt werden.
C) Im dritten Schritt (Fig. 10) wird dann mit einem im Durchmesser kleinen Werkzeug die Profilkontur des Turbinenschaufelblattes vorgeschruppt. Das Aufmass ist schaufeltypabhängig und kann bis zu 2 mm betragen. Beim Spiralhelifräsen erfolgt dies direkt analog dem Schruppen, jedoch mit kleinerem Werkzeugdurchmesser.
D) Im vierten Schritt (Fig. 10) wird mit den Vorschlichtwerkzeugen die bereits gespannte, schruppgefräste Turbinenschaufel durch Spiralhelifräsen und Linearfräsung auf ein konstantes Aufmass (plus 0,2 bis 1,2 mm) zur Endkontur gebracht. Das Aufmass ist schaufeltypabhängig. Bei verschiedenen Turbinenschaufeltypen können diese Schritte B und C auch entfallen.
E) Im fünften Schritt (Fig. 10) wird dann mit den Schlichtwerkzeugen der komplette Turbinenschaufelkanal durch Spiralhelifräsen auf die gewünschte Kontur und Oberflächenqualität gebracht.
F) Im sechsten Schritt werden dann die Rhombusflächen am Kopf und Fuß einschließlich der Turbinenschaufeleinhäng- und Dichtpartien hergestellt, d.h. die Funktionsflächen der Fußgeometrie (H-Fuß, usw.) werden in diesem Schritt bereits hergestellt (Fig. 11).
G) Danach erfolgt eine Vermessung der Turbinenschaufel mittels eines Positions- bzw. Konturmeßsystem (Taster- oder Lasermeßsysteme). Die Messdaten werden für die Dokumentation aufbereitet und wenn erforderlich Korrekturdaten für die gleiche oder nächste Turbinenschaufel erstellt und an die Steuerung bzw. zur Verrechnung im entsprechenden NC-Programm weitergeleitet. Nach dieser Operation ist die Turbinenschaufel bis auf die beiden Stirnflächen am Kopf und Fuß fertig.
H) Im drittletzten Schritt werden mit kleinen Schaftfräsern die Abbrechstege am Kopf- und Fußende herausgefräst.
I) Im vorletzten Schritt werden die stirnseitigen Funktionsflächen an der Kopfstirn- und Fußpartie hergestellt.
K) Im letzen Schritt wird der Abbrechsteg, wenn erforderlich, durch zwei Langlochbohrungen geschwächt.

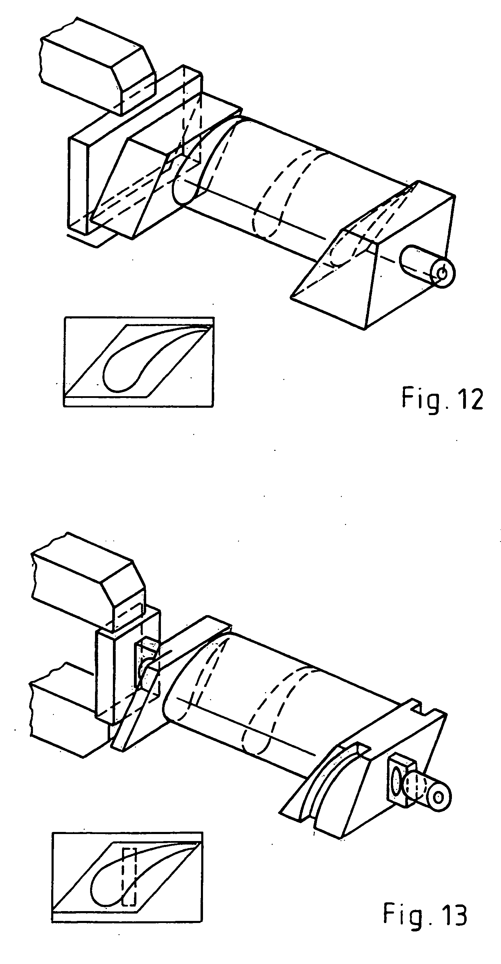

Fig. 12 zeigt die Bearbeitungsschritte C), D) und E) und Fig. 13 die Bearbeitungsschritte H), I) und K) bei einer Turbinenschaufel, deren eines Ende zur Abstützung durch eine Reitstockspitze vorbereitet ist.

## Patentansprüche

1. Verfahren zur Rundum-Bearbeitung eines Rohlings mit einer Bearbeitungsmaschine, wie beispielsweise einer Drehfräsmaschine, wobei der Rohling (RL) in einem Bearbeitungsschritt von wenigstens einem Spannmittel (SM) und von einem Gegenzentrum gehalten wird und von der Bearbeitungsmaschine, insbesondere der Drehfräsmaschine, alle Funktionsflächen des Rohlings, wie der Umfang und beide Stirnflächen, in die endgültige, der bestimmungsgemäßen Verwendung entsprechende Gesamtform gebracht werden, wobei es sich bei der Gesamtform um eine Turbinenschaufel handelt, wobei am Kopf und am Fuß deren Funktionsflächen in einer Aufspannung auf der Bearbeitungsmaschine (HSTM) gefertigt werden, **dadurch gekennzeichnet, dass** in dieser Aufspannung ein Abbrechsteg an beiden Seiten hergestellt wird.

2. Verfahren nach Anspruch 1, **dadurch gekennzeichnet, dass** die Abbrechstege nach der Entnahme der fertig bearbeiteten Turbinenschaufel von Hand entfernt und die Brechstellen von Hand geglättet werden.

3. Verfahren nach Anspruch 1 oder Anspruch 2, **dadurch gekennzeichnet, dass** es sich beim Rohling (RL) um einen Rohling aus Metall oder einem Keramikwerkstoff in Form eines zylindrischen oder rechteckigen oder polyederförmigen Querschnittes, insbesondere bevorzugt quaderförmigen Blockes oder um einen beliebig geformten Guss- oder Schmiederohling handelt.

## Claims

1. Method for machining a blank from all directions using a machine tool, such as a rotary milling machine, for example, wherein the blank (RL) is held in one machining step by at least one clamping means (SM) and by an opposing centre hole, and all the functional surfaces of the blank, such as the circumference and the two end faces, are brought by the machine tool, in particular the rotary milling machine, into the final overall form corresponding to the intended use, wherein the overall form is that of a turbine blade, wherein at the tip and at the root the functional surfaces thereof are produced in one setup on the machine tool (HSTM), **characterized in that** a break-off web is produced on both sides in this setup.

2. Method according to Claim 1, **characterized in that** the break-off webs are removed manually once the finish-machined turbine blade has been taken out and the breaking points are smoothed down manually.

3. Method according to Claim 1 or Claim 2, **characterized in that** the blank (RL) is a blank made of metal or a ceramic material in the form of a cylindrical or rectangular or polyhedral cross section, particularly preferably a cuboidal block or a cast or forged blank of any desired form.

## Revendications

1. Procédé d'usinage sur tout le pourtour d'une ébauche comprenant une machine d'usinage telle qu'une fraiseuse rotative, l'ébauche (RL) étant maintenue, dans une étape d'usinage, par au moins un moyen de serrage (SM) et par un contre-centre, et toutes les faces fonctionnelles de l'ébauche, comme le pourtour et les deux faces frontales, étant amenées à la forme d'ensemble définitive correspondant à l'utilisation conforme, par la machine d'usinage, notamment la fraiseuse rotative, la forme d'ensemble étant une aube de turbine, ses faces fonctionnelles étant fabriquées au niveau de la tête et de la base en une étape de fixation sur la machine d'usinage (HSTM), **caractérisé en ce que** dans cette étape de fixation, une nervure cassable est fabriquée sur les deux côtés.

2. Procédé selon la revendication 1, **caractérisé en ce que** les nervures cassables, après l'enlèvement de l'aube de turbine usinée finie, sont supprimées à la main et les points de rupture sont lissés à la main.

3. Procédé selon la revendication 1 ou 2, **caractérisé en ce que** l'ébauche (RL) est une ébauche en métal ou en un matériau en céramique de section transversale cylindrique ou rectangulaire ou polyédrique, notamment de préférence un bloc parallélépipédique, ou une ébauche coulée ou forgée de forme quelconque.
